# EUROPEAN PATENT APPLICATION

(11) **EP 4 741 834 A1**
(43) Date of publication of application: **13.05.2026**
(21) Application number: 24836367.3
(22) Date of filing: 05.07.2024
(51) Int. Cl.: G01Q 60/40, G01Q 70/08

(54) **CONDUCTIVE ATOMIC MICROSCOPE**

(30) Priority: 05.07.2023 KR 20230087309; 04.07.2024 KR 20240088006
(71) Applicant: Park Systems Corp., Yeongtong-gu Suwon-si, Gyeonggi-do 16229 (KR)
(72) Inventor: JO, Ahjin, Seoul 06204 (KR); AHN, Byoung-Woon, Anyang-si Gyeonggi-do 14045 (KR); PARK, Sang-il, Seongnam-si Gyeonggi-do 13540 (KR)
(74) Representative: Müller Schupfner & Partner Patent- und Rechtsanwaltspartnerschaft mbB (Muc)
(86) International application number: PCT/KR2024/009538
(87) International publication number: WO 2025/009920

(57) **Abstract**

Disclosed is a conductive atomic microscope in which the current flowing in a sample and a probe can be maintained constant by adjusting the voltage supplied to the sample on the basis of the current flowing in the probe. The conductive atomic microscope comprises: a voltage supply device for supplying voltage to a sample; a current detection device for detecting the current generated by the supplied voltage; and a controller for adjusting the voltage value supplied to the sample by the voltage supply device on the basis of the current value detected by the current detection device.

## Description

### Technical Field

The present disclosure relates to a conductive atomic microscope, and more particularly, to a conductive atomic microscope that scans the surface of a sample by means of a tip of a cantilever that contacts the surface of the sample.

### Background Art

An atomic force microscope (AFM) acquires surface information of a sample using a tip. The atomic force microscope includes a tip and a cantilever connected to the tip. The cantilever possesses a high degree of flexibility and bends due to the atomic repulsive force-specifically, attractive and repulsive forces-acting between the sharp tip suspended at its end and the sample surface, and by measuring the degree of this bending through changes in the reflection angle of laser light, surface information of the sample can be obtained.

The atomic force microscope can be divided into a contact mode and a non-contact mode. The atomic force between the tip and the sample changes from repulsive force to van der Waals attractive force as the distance between the two increases. The contact mode AFM uses repulsive force, and the non-contact mode AFM uses attractive force. The magnitude of the repulsive force used in the contact mode is very small, ranging from 1 to 10 nN, but the cantilever with the tip is also very sensitive, so it is bent by a small change in force. The angular displacement of the cantilever that occurs at this time also bends the angle of the laser beam reflected off the cantilever's upper surface, and by measuring the deflection angle of this laser beam using a PSPD (position sensitive photodiode), it is possible to recognize very small changes in surface elevation. Cantilevers are usually 100µm long, 10µm wide, and 1µm thick, and play a role in amplifying the microscopic interaction between the tip and the sample and transmitting it to the macroscopic world. The tip attached to the end of the cantilever is usually 10µm high and the diameter of the end of the tip is about 10nm. The contact mode AFM has the advantage of relatively easy operation and fast response speed.

The contact mode AFM includes a conductive atomic microscope (C-AFM). The conductive atomic microscope obtains surface information of a sample by applying a voltage to the sample and/or the tip and measuring the current flowing inside the sample due to the potential difference thereof.

A conventional conductive atomic microscope measured the IV characteristics of the sample by providing a constant voltage to the sample and/or tip. Here, the IV characteristics include the resistance between the tip and the sample, the threshold voltage, etc.

However, as in the conventional conductive atomic microscope, when a constant voltage is supplied to a sample and/or tip while scanning the surface of the sample, there is a problem that the current flowing through the sample and/or tip may temporarily exceed a reference range, and the current exceeding the reference range may damage the sample and/or tip.

### Disclosure of Invention

### Technical Problem

An object of the present disclosure for solving the above-described problem is to provide a conductive atomic microscope in which the current flowing in a sample and a tip can be maintained constant by adjusting the voltage supplied to the sample based on the current flowing in the tip.

### Solution to Problem

In order to achieve the above-described object, a conductive atomic microscope according to an embodiment of the present disclosure is a conductive atomic microscope (C-AFM, conductive-AFM) that scans the surface of the sample by measuring the current flowing inside the sample through a tip of a cantilever, and the conductive atomic microscope comprises: a voltage supply device for supplying voltage to the sample; a current detection device for detecting the current generated by the supplied voltage; and a controller for adjusting the voltage value supplied to the sample by the voltage supply device based on the current value detected by the current detection device.

The cantilever and the current detection device are connected by a conducting wire through which the current generated by the supplied voltage flows, and a current amplifier which amplifies the current transmitted from the cantilever is installed on the conducting wire.

The controller controls the voltage supply device based on the current value flowing through the conducting wire to maintain the current value flowing through the tip within the set point current range.

When the current value detected by the current detection device exceeds the set point current, the controller controls the voltage supply device to lower the voltage supplied to the sample.

When the current value detected by the current detection device is less than the set point current, the controller controls the voltage supply device to increase the voltage supplied to the sample.

The set point current is characterized by being 10 pA to 20 pA.

When the current value detected by the current detection device exceeds a preset breakdown limit current value, the controller controls the voltage supply device to lower the voltage supplied to the sample.

After lowering the voltage supplied to the sample, the controller increases the voltage supplied to the sample to the max voltage when the current value detected by the current detection device is less than a first current value.

After increasing the voltage supplied to the sample to the max voltage, the controller adjusts the voltage supplied to the sample based on the current value detected by the current detection device when the current value detected by the current detection device exceeds a second current value.

### Advantageous Effects of Invention

According to the conductive atomic microscope of the present disclosure, the current flowing through the sample can be kept constant, thereby preventing damage to the sample and the tip by the current exceeding the reference range.

### Brief Description of Drawings

FIGS. 1 and 2 are block diagrams schematically illustrating respective configurations of a conductive atomic microscope according to the present disclosure.
FIG. 3 is a diagram showing a change in a current value according to a supplied voltage when a surface of a sample is measured through the conductive atomic microscope.
FIG. 4 is a diagram showing a change in the current value according to a constant supply voltage and the current flowing the sample and the tip being limited according to the set point current when measuring the surface of the sample through the conductive atomic microscope.
FIG. 5 is a diagram illustrating IV graphs when adjusting a voltage supplied to a tip and/or a sample based on currents flowing through the tip, the cantilever, and the conducting wire by a conductive atomic microscope according to the present disclosure.
FIG. 6 is a diagram illustrating a breakdown characteristic and a constant current image of a threshold voltage of a conductive atomic microscope.
FIG. 7 is a diagram illustrating a current limit for protecting a sample and/or a tip when a breakdown occurs in the conductive atomic microscope according to the present disclosure.

### Best Mode for Carrying out the Invention

Hereinafter, some embodiments of the present disclosure will be described in detail with reference to exemplary drawings. In assigning reference numbers to the components of each drawing, it should be noted that the same components are made to have the same sign as much as possible, even if they are displayed on different drawings.

Further, in describing the embodiment of the present disclosure, a detailed description of known constructions or functions is omitted if it is determined that the detailed description of known constructions or functions hinders understanding of the embodiment of the present disclosure.

In addition, in describing the components of the embodiments of the present disclosure, terms such as first, second, A, B, (a), (b), and the like may be used. These terms are used only to distinguish a component from other components, and the nature, sequence, or order of the component is not limited by the terms.

In the present disclosure, the singular type also includes the plural type unless otherwise specified in the phrase. The "includes" and/or "including" used in the specification does not exclude the presence or addition of one or more other components other than the mentioned components.

Hereinafter, the present disclosure will be described in more detail with reference to the accompanying drawings.

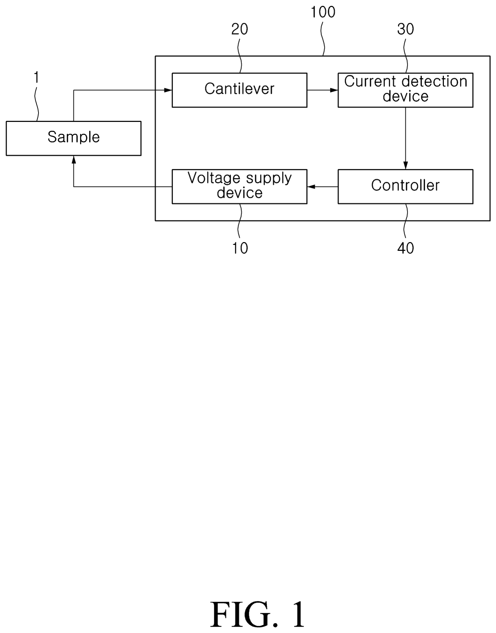

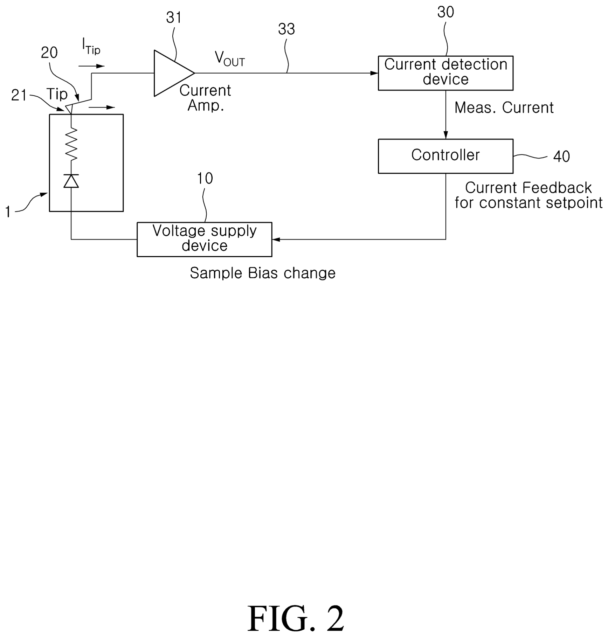

FIGS. 1 and 2 are block diagrams schematically illustrating respective configurations of a conductive atomic microscope 100 according to the present disclosure.

The conductive atomic microscope 100 (C-AFM, conductive-AFM) according to the present disclosure scans the surface of a sample 1 by measuring the current flowing in the sample 1 through a tip 21 of a cantilever 20.

The conductive atomic microscope 100 according to the present disclosure includes a voltage supply device 10, a cantilever 20, a current detection device 30, and a controller 40, referring to FIGS. 1 and 2.

The voltage supply device 10 supplies a voltage to the tip 21 or the sample 1. As the voltage supply device 10 supplies a voltage to the tip 21 or the sample 1, a potential difference is generated in between the sample 1 and the tip 21, and a current flows in the sample 1 due to the potential difference.

The current detection device 30 detects and measures the current generated by the voltage supplied to the sample 1 and the tip 21. The current detection device 30 detects and measures the current flowing inside the sample 1 according to the potential difference caused by the voltage supplied by the voltage supply device 10.

The voltage supply device 10 may supply a DC voltage to the sample 1 or the tip 21. When the voltage supply device 10 supplies the DC voltage to the sample 1 or the tip 21, a current flows through the sample 1 and the tip 21 due to a potential difference according to the direct current voltage, and the current detection device 30 detects and measures the current.

The current flowing inside the sample 1 flows along the tip 21 in contact with the sample 1 and the cantilever 20 connected to the tip 21. The current detection device 30 detects and measures the current flowing along the tip 21 and the cantilever 20.

The cantilever 20 and the current detection device 30 are connected by a conducting wire 33. A current flowing along the tip 21 in contact with the sample 1 and the cantilever 20 is transmitted to the conducting wire 33 and flows therethrough. A current amplifier 31 is installed on the conducting wire 33 connecting the cantilever 20 and the current detection device 30. The current amplifier 31 amplifies a microscopic current signal at the level of pA to µA flowing through the sample 1, the cantilever 20 and the like.

The controller 40 receives a current value detected and measured by the current detection device 30 from the current detection device 30. The controller 40 controls the voltage supply device 10 based on the current value received from the current detection device 30. The controller 40 controls the voltage supply device 10 to adjust the voltage supplied to the sample 1 and/or the tip 21.

The controller 40 controls the voltage supply device 10 based on the current value flowing in the conducting wire 33 detected and measured by the current detection device 30, thereby keeping the current value flowing in the tip 21 within the set point current range.

The voltage supply device 10 can convert and regulate the voltage supplied to the sample 1 and/or the tip 21 according to the control signal of the controller 40 by a known voltage conversion means.

The voltage supply device 10, as an embodiment, may include a known transformer and rectifier to convert and regulate the voltage supplied to the sample 1 and/or the tip 21. The voltage supply device 10 may convert a voltage through a transformer according to a control signal of the controller 40 and provide a stable voltage through the rectifier.

The voltage supply device 10, as an embodiment, may include a known variable resistance device to convert and regulate the voltage supplied to the sample 1 and/or the tip 21. The voltage supply device 10 may regulate the output voltage by regulating the voltage distribution through the variable resistance device controlled in response to a control signal from the controller 40.

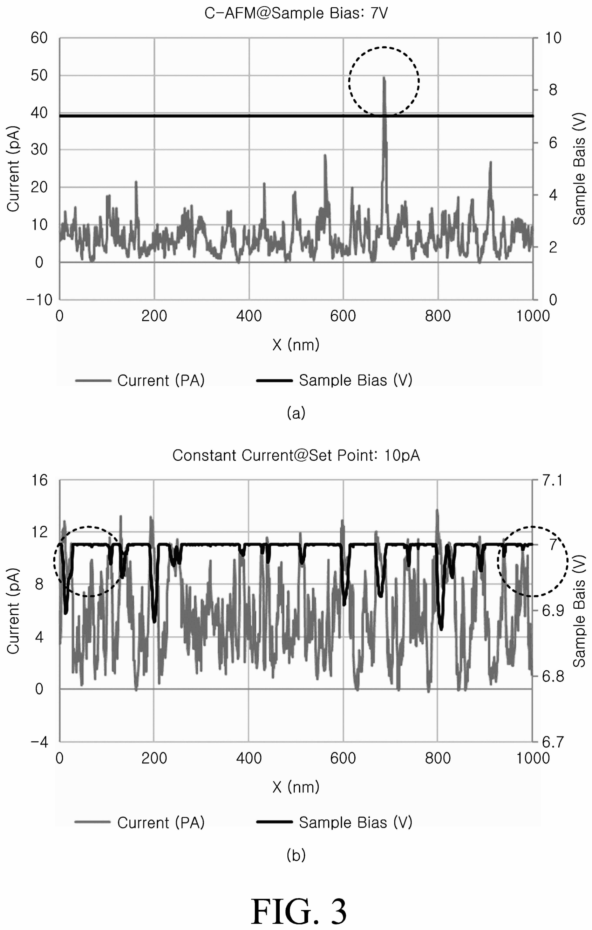

FIG. 3 is a diagram showing a change in a current value according to a supplied voltage when a surface of a sample is measured through the conductive atomic microscope 100. Specifically, (a) of FIG. 3 is a diagram showing a change in a current value when a constant voltage of 7 V is supplied to the sample 1 and/or the tip 21, and (b) of FIG.3 is a diagram showing a change in supplied voltage when the set point current is set to 10 pA.

When the conductive atomic microscope 100 provides a constant voltage to the sample 1 and/or the tip 21 during surface measurement of the sample 1, an event in which the leakage current suddenly increases may occur, as shown in (a) of FIG. 3. The conductive atomic microscope 100 measures the current flowing inside the sample 1 through the tip 21 in contact with the surface of the sample 1.

The surface of the sample 1 has a part where current flows well and a part where current does not flow well, and when the tip 21 comes into contact with the part where current flows well, the leakage current may suddenly increase as described above. If the leakage current suddenly increases, the sample 1 and the tip 21 may be damaged by the leakage current.

In the conductive atomic microscope 100 according to the present invention, as illustrated in (b) of FIG. 3, when the leakage current increases above the set point current, the controller 40 controls the voltage supply device 10 to lower the voltage supplied to the sample 1 and/or the tip 21, thereby limiting the current flowing through the tip 21, the cantilever 20, and the conducting wire 33 to below the set point current.

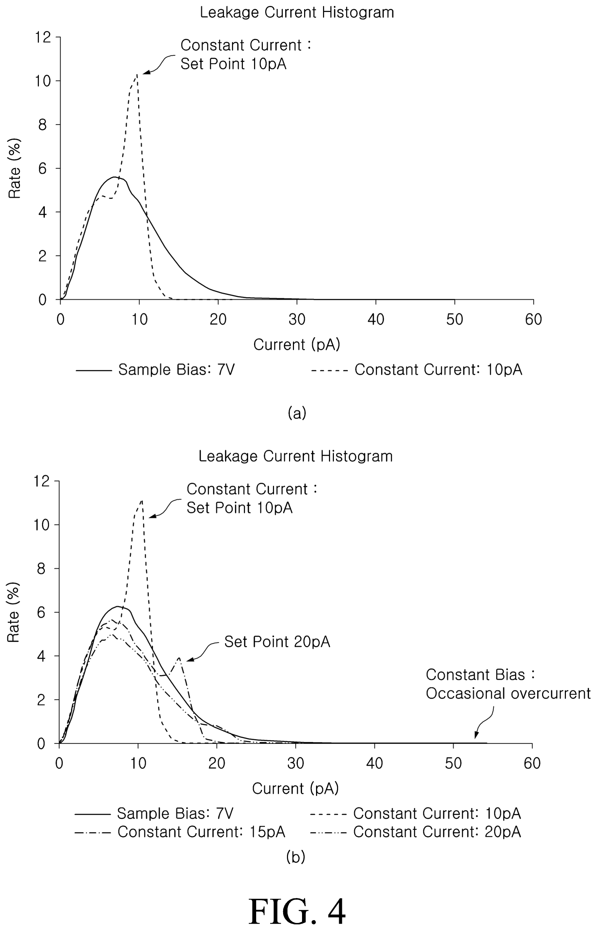

FIG. 4 is a diagram showing a change in the current value according to a constant voltage supplied when measuring the surface of the sample 1 through the conductive atomic microscope 100 and a state in which the current flowing through the sample 1 and the tip 21 is limited according to the set point current.

Specifically, (a) of FIG. 4 is a diagram showing a change in a current value when a constant voltage of 7 V is provided to the sample 1 and/or the tip 21 and a state in which a current flowing through the sample 1 and the tip 21 are limited when the set point current is set to 10 pA, and (b) of FIG. 4 is a diagram showing a change in a current value when a constant voltage of 7 V is provided to the sample 1 and/or the tip 21 and a state in which a current flowing through the sample 1 and the tip 21 are limited when the set point current is set to 10 pA, 15 pA, and 20 pA.

Referring to (a) and (b) of FIG. 4, in the conventional conductive atomic microscope manner, that is, when a constant voltage (7 V) is provided to the sample 1 and/or the tip 21 to measure the surface of the sample 1, a basic leakage current of about 10 pA exists, and a large leakage current or breakdown current, i.e., an overcurrent, occurs. As shown in (b) of FIG. 4, the overcurrent may be 50 pA or more.

On the other hand, when the surface of the sample 1 is measured by adjusting the voltage value in a state in which the set point current is set to 10pA, 15pA, and 20pA, an overcurrent of 20pA or more may not occur.

In particular, in the case of measuring the surface of the sample 1 by adjusting the voltage value while setting the set point current to 20 pA (see (b) of FIG. 4), it can be seen that the shape of the current value distribution is similar to that when a constant voltage of 7V is provided in the range of 0 to 20 pA of the current value, and an overcurrent of 20 pA or more does not occur.

Therefore, in the conductive atomic microscope 100 according to the present disclosure, the set point current may be set to 10 to 20 pA, preferably 20 pA, when the surface of the sample 1 is measured. However, the present disclosure is not limited thereto, and the set point current may be changed to the set point current having a similar shape to the current value distribution when a constant voltage is provided and that does not cause an overcurrent exceeding a specific current value, depending on the type of sample,.

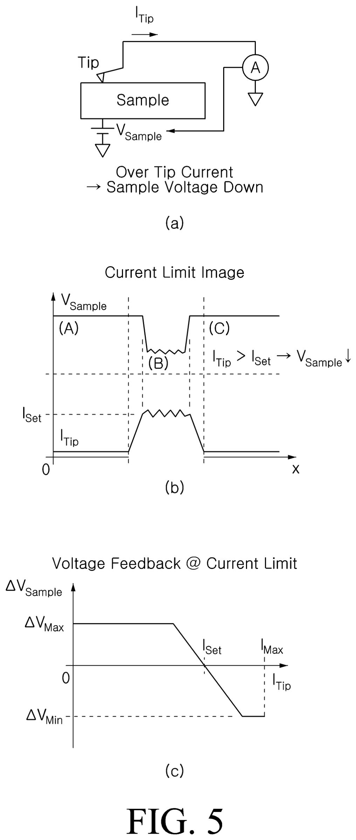

FIG. 5 is a diagram illustrating IV graphs when adjusting a voltage supplied to a tip 21 and/or a sample 1 based on currents flowing through the tip 21, the cantilever 20, and the conducting wire 33 by a conductive atomic microscope 100 according to the present disclosure.

Referring to (a) of FIG. 5, in a conductive atomic microscope 100 according to the present disclosure, when a surface of a sample 1 is measured by means of a tip 21, a current detection device 30 measures and detects current values flowing through the tip 21, a cantilever 20, and a conducting wire 33, and a controller 40 adjusts an output voltage of a voltage supply device 10 to limit the occurrence of an overcurrent based on the measured and detected current values.

Referring to (b) and (c) of FIG.5, the conductive atomic microscope 100 according to the present disclosure provides constant voltage when the current values flowing through the tip 21, the cantilever 20, and the conducting wire 33 are less than or equal to the set point current (see section (A) in (b) of FIG. 5).

Thereafter, when the current value measured and detected by the current detection device 30 exceeds the set point current, the conductive atomic microscope 100 controls the voltage supply device 10 to gradually lower the voltage supplied to the sample 1(see section (B) in (b) of FIG. 5). The conductive atomic microscope 100 controls the voltage supply device 10 to gradually lower the voltage supplied to the sample 1, thereby maintaining the current values flowing through the tip 21 and sample 1 within the set point current so that the current values flowing through the tip 21 and sample 1 does not exceed a predetermined range of the set point current.

Thereafter, when the current value detected by the current detection device 30 is less than the set point current, the conductive atomic microscope 100 controls the voltage supply device 10 to gradually increase the voltage supplied to the sample 1 (see section (C) in (b) of FIG. 5). The conductive atomic microscope 100 controls the voltage supply device 10 to gradually increase the voltage supplied to the sample 1, thereby maintaining the current values flowing through the tip 21 and the sample 1 within a predetermined range of the set point current.

In the conductive atomic microscope 100 according to the invention, when the current values flowing through the tip 21, the cantilever 20 and the conducting wire 33 exceed or are less than the set point current, the voltage is gradually adjusted by controlling the voltage supply device 10, preferably having a reaction rate of about 1 ms.

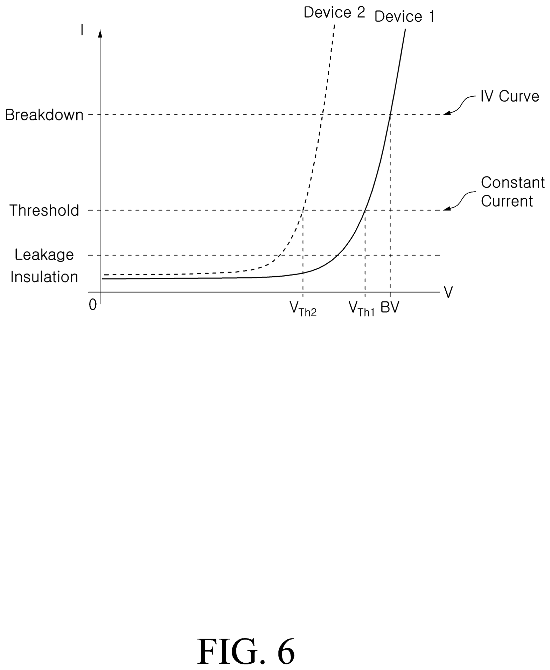

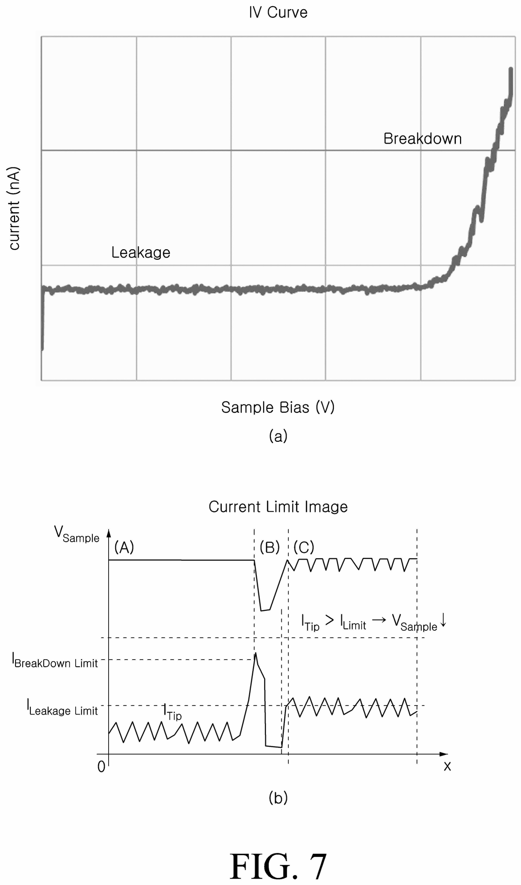

FIG. 6 is a diagram illustrating a breakdown characteristic of a conductive atomic microscope 100 and a constant current image of a threshold voltage, and FIG. 7 is a diagram illustrating a current limit for protecting a sample 1 and/or a tip 21 when a breakdown occurs in a conductive atomic microscope 100 according to the present disclosure.

In the conductive atomic microscope 100, the breakdown voltage has an important aspect because it may lead to malfunction or damage of the sample 1.

For example, as illustrated in FIG. 6, when the sample 1 and/or the tip 21 is subjected to a break down due to a current above a threshold value, the sample 1 and/or the tip 21 may be continuously damaged by repeated measurement through the conductive atomic microscope 100.

The conductive atomic microscope 100 according to the present disclosure, as shown in FIG. 7, controls the voltage supply device 10 to lower the voltage supplied to the sample 1 when the current value detected by the current detection device 30 exceeds a preset threshold value (breakdown current), thereby protecting the sample 1 and/or the tip 21 when a breakdown occurs.

Referring to (a) of FIG. 7, a breakdown in the conductive atomic microscope 100 may occur, for example, when the leakage current increases by 10 times or more per 1V to 2V.

The conductive atomic microscope 100 according to the present disclosure, as shown in (b) of FIG. 7, protects the sample 1 and/or the tip 21 in the event of breakdown by controlling the voltage supply device 10 to rapidly lower the voltage supplied to the sample 1 when the current value detected by the current detection device 30 exceeds a preset breakdown limit current value.

Specifically, referring to the section (A) in (b) of FIG. 7, the conductive atomic microscope 100 according to the present disclosure provides a constant voltage to the sample 1 and/or the tip 21 when the current flowing through the tip 21, the cantilever 20, and the conducting wire 33 is less than or equal to a preset Leakage Limit current value.

In the conductive atomic microscope 100 according to the present disclosure, referring to the section (B) in (b) of FIG. 7, when the current flowing through the tip 21, the cantilever 20, and the conducting wire 33 is detected and measured in excess of a preset breakdown limit current value, the voltage supply device 10 immediately lowers the voltage supplied to the sample 1 and/or the tip 21. In one embodiment, the voltage supply device 10 immediately lowers the voltage supplied to the sample 1 and/or the tip 21 when the current flowing through the tip 21, the cantilever 20 and the conducting wire 33 is detected and measured in excess of a preset breakdown limit current value, and the reaction rate at this time may be 1 ms or less.

The conductive atomic microscope 100 according to the present invention immediately lowers the voltage supplied to the sample 1 and/or the tip 21 when the current flowing through the tip 21, the cantilever 20 and the conducting wire 33 is detected and measured to exceed a preset breakdown limit current value, and then slowly increases the voltage supplied to the sample 1 and/or the tip 21 until it is saturated with the Max Voltage when the current flowing through the tip 21, the cantilever 20 and the conducting wire 33 is less than a first current value smaller than the Leakage Limit current. Here, the Max voltage may be a voltage equal to a constant voltage supplied to the sample 1 and/or the tip 21 in the section (A) of FIG. 7 (b).

The conductive atomic microscope 100 according to the present invention slowly increases the voltage supplied to the sample 1 and/or the tip 21 until it is saturated with the Max Voltage when the current flowing through the tip 21, the cantilever 20, and the conducting wire 33 is detected and measured to be less than a first current value, and then, as in section (C) in (b) of FIG. 7, when the current flowing through the tip 21, the cantilever 20, and the conducting wire 33 exceeds a second current value (Leakage Limit current), the controller 40 adjusts the voltage supplied to the sample 1 and/or the tip 21 based on the current value flowing through the tip 21, the cantilever 20, and the wire 33. The controller 40 can slowly lower or maintain the voltage when adjusting the voltage supplied to the sample 1 and/or the tip 21 based on the current values flowing through the tip 21, the cantilever 20 and the conducting wire 33.

The controller 40 slowly lowers or maintains the voltage supplied to the sample 1 and/or the tip 21 based on the current values flowing through the tip 21, the cantilever 20 and the conducting wire 33 so that the current values flowing through the tip 21, the cantilever 20 and the conducting wire 33 are controlled to correspond to a leakage limit current value (second current value)(see section (C) of (b) in FIG. 7).

The conductive atomic microscope 100 according to the present disclosure can protect the sample 1 and/or the tip 21 in the event of a breakdown by adjusting the voltage supplied to the sample 1 and/or the tip 21 based on the current flowing through the tip 21, the cantilever 20 and the conducting wire 33 as shown in (b) of FIG. 7.

The scope of protection of the present disclosure is not limited to the description and expression of the embodiments explicitly described above. Additionally, it is reiterated that the scope of protection of the present disclosure may not be limited by obvious changes or substitutions in the technical field to which the present disclosure pertains.

## Claims

1. A conductive atomic microscope (C-AFM, conductive-AFM) that scans the surface of a sample by measuring the current flowing inside the sample through a tip of a cantilever comprising:
a voltage supply device for supplying voltage to the sample;
a current detection device for detecting a current generated by the supplied voltage; and
a controller for adjusting a voltage value supplied to the sample by the voltage supply device based on a current value detected by the current detection device.

2. The conductive atomic microscope of claim 1,
the cantilever and the current detection device are connected by a conducting wire through which the current generated by the supplied voltage flows, and
a current amplifier which amplifies the current transmitted from the cantilever is installed on the conducting wire.

3. The conductive atomic microscope of claim 2,
the controller controls the voltage supply device based on a current value flowing through the conducting wire to maintain the current value flowing through the tip within the set point current range.

4. The conductive atomic microscope of claim 3,
when the current value detected by the current detection device exceeds the set point current, the controller controls the voltage supply device to lower the voltage supplied to the sample.

5. The conductive atomic microscope of claim 4,
when the current value detected by the current detection device is less than the set point current, the controller controls the voltage supply device to increase the voltage supplied to the sample.

6. The conductive atomic microscope of claim 5,
the set point current is **characterized by** being 10 pA to 20 pA.

7. The conductive atomic microscope of claim 3,
when the current value detected by the current detection device exceeds a preset breakdown limit current value, the controller controls the voltage supply device to lower the voltage supplied to the sample.

8. The conductive atomic microscope of claim 7,
**characterized in that** after lowering the voltage supplied to the sample, the controller increases the voltage supplied to the sample to the Max Voltage when the current value detected by the current detection device is less than a first current value.

9. The conductive atomic microscope of claim 8,
**characterized in that** after increasing the voltage supplied to the sample to the Max Voltage, the controller adjusts the voltage supplied to the sample based on the current value detected by the current detection device when the current value detected by the current detection device exceeds a second current value.
